# EUROPÄISCHE PATENTANMELDUNG

(11) **EP 4 344 954 A1**
(43) Veröffentlichungstag der Anmeldung: **03.04.2024**
(21) Anmeldenummer: 23192828.4
(22) Anmeldetag: 22.08.2023
(51) Int. Cl.: B60R 7/04, B60R 11/02

(54) **KONSOLENANORDNUNG FÜR EIN FAHRZEUG**

(30) Priorität: 22.09.2022 DE 102022210023
(71) Anmelder: Volkswagen Aktiengesellschaft, 38440 Wolfsburg (DE)
(72) Erfinder: Busse, Frank, 38162 Destedt (DE); Broedermann, Lea, 38442 Wolfsburg (DE); Bitter, André, 38446 Wolfsburg (DE); Ströhlein, Tobias, 38110 Braunschweig (DE); Steitz, Sebastian, 38446 Wolfsburg (DE)

(57) **Zusammenfassung**

Die Erfindung betrifft eine Konsolenanordnung für ein Fahrzeug, mit einer Konsole (1) mit mindestens einer Vertiefung (8, 9) zur Aufnahme mindestens eines Gegenstands, mit einem Randbereich (12), der zumindest einen Teilumfang der Vertiefung (8, 9) umgibt, und mit einer Schnittstelle (16), die eine elektrische Kontaktierung und zugleich eine lösbare mechanische Verbindung mit einer korrespondierenden komplementären Schnittstelle (28) eines Funktionselements (23) ausbildet, wenn sich das Funktionselement (23) in der Konsole (1) in Betriebsposition (30) befindet.

Das Funktionselement (23) weist mindestens eine Abstützung (50, 53) auf, mit der es sich an der Konsole (1) abstützt, und das Funktionselement (23) ist so ausgestaltet, dass seine mechanische Verbindung mit der Konsole (1) ausschließlich über die Schnittstelle (16) bewirkt ist und dass das Funktionselement (23) in seiner Betriebsposition (30) ansonsten mit der Konsole (1) mechanisch unverbunden bleibt.

## Beschreibung

Die Erfindung betrifft eine Konsolenanordnung für ein Fahrzeug mit einer Konsole mit mindestens einer Vertiefung zur Aufnahme mindestens eines Gegenstands und mit einem Randbereich, der zumindest einen Teilumfang der Vertiefung umgibt.

Im Rahmen der vorliegenden Erfindung ist der Begriff Konsole weit zu verstehen und umfasst unter anderem Konsolen, die typischerweise zwischen den Vordersitzen angeordnet sind, aber ebenso auch Konsolen, die nahe der Armaturentafel oder im Fahrzeugfond angeordnet sind.

Aus dem Stand der Technik sind verschiedene Konsolenanordnungen bekannt, die primär auf die Halterung und/oder Aufbewahrung von Gegenständen gerichtet sind. In jüngerer Vergangenheit sind auch mit elektromechanischen Schnittstellen ausgestattete Konsolen bekannt geworden, in die verschiedene nutzerindividuelle Geräte einsetzbar sind bzw. austauschbar gehalten und elektrisch verbunden sind. Derartige Einsatzteile werden nachfolgend auch als Funktionselemente bezeichnet. Derartige multifunktionale elektromechanische Schnittstellen werden auch als Multi-Hub bezeichnet.

Aus der EP 1 946 971 A2 ist ein Konsoleneinbauelement für ein Fahrzeug mit einem Staufach zur sicheren Aufnahme unterschiedlicher elektronischer Geräte bekannt. Das Staufach weist Fixierelemente auf, die das jeweilige im Staufach aufgenommene Gerät in Position halten. Im Bereich um den oberen Rand des Staufachs ist ein Multistecker mit einem ausziehbaren Kabel angeordnet, das über einen Kabelaufrollmechanismus selbstaufrollend ausgestaltet ist. Bei Bedarf kann das Kabel herausgezogen werden, um das Gerät ortsunabhängig von der korrespondierenden Gerätebuchse mit dieser zu verbinden.

Aus der DE 20 2007 012 617 U1 geht ein Einsatz für eine Vorrichtung zum Halten von Getränkebehältern (sogenannter Cup-Holder) hervor, der in der Vorrichtung lagefixiert abgestützt ist und von oben zugängliche Fächer oder Ausnehmungen aufweist oder mit Funktionselementen versehen ist oder als Adapter mit mindestens einer Lagerschale zur Fixierung von Kleingeräten ausgebildet ist. In den Einsatz sind bedarfsweise Wechseleinsätze einsetzbar, die mit einer bodenseitigen Durchgangsöffnung versehen sind, wobei am Boden ein Steckerhalter angeformt sein kann. Hierbei kann es sich als problematisch erweisen, wenn in dem Cup-Holder ausgetretene Flüssigkeiten stehen und an die bodenseitig angeordneten Steckkontaktverbinder gelangen.

Aus der DE 103 16 817 B4 ist eine Haltevorrichtung für Getränkebehälter in einer Konsole eines Fahrzeugs bekannt mit einem an der Konsole lösbar angeordneten Halterungselement, das bei Nichtgebrauch in eine im Boden der Konsole ausgebildete Aufnahmevertiefung einlegbar ist.

Die DE 10 2018 005 602 B3 beschreibt eine Konsolenanordnung mit einem in eine Aufnahme einsetzbaren Behälter, wobei mit der Aufnahme zusammenwirkende Mittel eine mechanische Verdrehsicherung des Behälters bewirken. Die zusammenwirkenden Mittel sind als Nut und korrespondierende Schiene des Behälters ausgestaltet und sind in zusätzlicher Funktion als elektrische Schnittstelle mit einem Kontaktfuß und einem Kontaktsockel ausgebildet.

Die WO 2013/127323 A1 betrifft eine Teilungseinrichtung, die in einen Gegenstandshalter eines Fahrzeugs einsetzbar ist. Im eingesetzten Zustand verriegelt die Teilungseinrichtung mit korrespondierenden mechanischen Rastmitteln des Gegenstandshalters und unterteilt diesen in zumindest zwei separierte Aufnahmebereiche. Die Teilungseinrichtung kann beispielsweise einen Cup-Holder (Getränkefach) und in ein weiteres Aufnahmefach ausbilden. In das weitere Aufnahmefach kann sich ein von wenigstens einer Seitenwand und einer sich quer im Gegenstandshalter erstreckenden Wand begrenzter zusätzlicher Aufnahmeraum erstrecken, der zur Halterung eines elektrischen Geräts wie beispielsweise einem Mobiltelefon dient. Das bedarfsweise Einsetzen in den bzw. die Entnahme der Teilungseinrichtung aus dem Gegenstandshalter gestaltet sich aufgrund der mechanischen Verrastung vergleichsweise aufwändig und ist relativ beschwerlich.

Wie eingangs schon erwähnt, besteht zunehmend Bedarf, nutzerangepasst verschiedene Funktionselemente mit multifunktional bestückbaren mechanischen und elektromechanischen Schnittstellen (Multi-Hub) zu koppeln. Dabei können die Funktionselemente vollständig im Multi-Hub aufgenommen sein. Häufig ragen die Funktionselemente aber aus dem Multi-Hub heraus. Dies hat zur Folge, dass aufgrund wirkender Gewichts- und Beschleunigungskräfte erhebliche Kräfte auf die Funktionselemente und gegebenenfalls von diesen aufgenommene Geräte wirken können.

Vor diesem Hintergrund besteht eine Aufgabe der Erfindung darin, eine Konsolenanordnung für ein Fahrzeug derart auszugestalten, dass Funktionselemente nutzerfreundlich und leicht einsetzbar bzw. mit einer korrespondierenden Schnittstelle koppelbar und ebenso leicht austauschbar sind und gleichzeitig mit dem Einsetzen für eine sichere und ausreichende mechanische Stabilisierung gesorgt ist.

Diese Aufgabe wird erfindungsgemäß gelöst durch eine Konsolenanordnung für ein Fahrzeug mit den Merkmalen des Patentanspruchs 1.

Demgemäß umfasst eine erfindungsgemäße Konsolenanordnung für ein Fahrzeug eine Konsole mit mindestens einer Vertiefung zur Aufnahme mindestens eines Gegenstands, einen Randbereich, der zumindest einen Teilumfang der Vertiefung umgibt, und eine Schnittstelle, die eine elektrische Kontaktierung und zugleich eine lösbare mechanische Verbindung mit einer korrespondierenden komplementären Schnittstelle eines Funktionselements ausbildet, wenn sich das Funktionselement in der Konsole in Betriebsposition befindet, wobei das Funktionselement mindestens eine Abstützung aufweist, mit der es sich in Betriebsposition an der Konsole abstützt, und wobei das Funktionselement so ausgestaltet ist, dass seine mechanische Verbindung mit der Konsole in der Betriebsposition ausschließlich über die Schnittstelle bewirkt ist und dass das Funktionselement ansonsten mit der Konsole mechanisch unverbunden bleibt.

Mit dem Ausdruck "mechanisch unverbunden" ist im Rahmen der Erfindung insbesondere gemeint, dass außer der Schnittstellenverbindung in Betriebsposition keine weitere lösbare form- oder kraftschlüssige mechanische Verbindung, insbesondere keine Rast- oder Schnappverbindung, des Funktionselements mit der Konsole an anderer Stelle besteht.

Ein erster Vorteil der Erfindung besteht damit darin, dass eine sehr einfache Bedienbarkeit und damit Benutzerfreundlichkeit gegeben ist, indem mit dem Einsetzen des Funktionselements durch die Schnittstelle sowohl eine elektrische Kontaktierung und zugleich auch eine - und zwar die einzige - lösbare mechanische Verbindung entsteht. Dennoch kann das Funktionselement vergleichsweise große Abmessungen und/oder großes Gewicht aufweisen, weil es durch die Abstützung zusätzlich mechanisch - insbesondere gegen schwerkraftbedingte Belastungen und gegen im Fahrbetrieb auftretende Beschleunigungskräfte - stabilisiert ist.

Diese mechanische Abstützung erfordert vorteilhafterweise keine Anpassung oder keinen signifikanten Eingriff in das Design des Fahrzeuginnenraums. In vorteilhafter Weise kann der üblicherweise limitierte verfügbare Bauraum im Bereich der Konsole optimal genutzt werden, weil die Abstützung bevorzugt an anderweitig nicht benutzten oder benutzbaren Oberflächen der Konsolenanordnung erfolgen kann.

Weitere bevorzugte Ausgestaltungen der Erfindung ergeben sich aus den übrigen, in den Unteransprüchen und in der nachfolgenden Beschreibung genannten sowie in den Figuren der Zeichnung dargestellten Merkmalen, wobei die einzelnen Merkmale grundsätzlich unabhängig voneinander und in beliebiger Kombination realisiert werden können.

Das Funktionselement kann bevorzugt ein Gerätehalter, insbesondere für ein elektrisches Gerät, sein. In diesem Zusammenhang sieht eine weitere bevorzugte Fortbildung der Erfindung vor, dass das Funktionselement eine kabellose Ladeeinrichtung für ein elektrisches Gerät aufweist.

Im Hinblick auf eine hohe Flexibilität in der wahlweisen Ausstattung mit verschiedenen Funktionselementen sieht eine bevorzugte Weiterbildung der Erfindung vor, dass die Schnittstelle eine multifunktionale mit verschiedenen Funktionselementen bestückbare Schnittstelle ist.

Eine besonders einfach zu handhabende und dennoch mechanisch zuverlässige Gestaltung der erfindungsgemäßen Konsolenanordnung sieht vor, dass sich die Abstützung in Betriebsposition des Funktionselements auf dem Boden der Vertiefung - und besonders bevorzugt: nur dort - abstützt.

Eine bevorzugte Ausgestaltung der Erfindung sieht vor, dass die Vertiefung einen Cup-Holder ausbildet und dass die elektrische Kontaktierung zwischen der Schnittstelle und der komplementären Schnittstelle in Betriebsposition des Funktionselements in vertikalem Abstand vom Boden der Vertiefung erfolgt. Dadurch wird vorteilhafterweise vermieden, dass etwaige sich am Bodenbereich des Cup-Holders befindliche, störende Elemente - insbesondere ausgetretene Flüssigkeiten - die Funktionalität der erfindungsgemäßen Konsolenanordnung beeinträchtigen.

Um einen besonders sicheren, auch Querkräfte abstützenden Halt des Funktionselements zu gewährleisten, ist nach einer bevorzugten Fortbildung der Erfindung vorgesehen, dass die Abstützung als ein in die Vertiefung einführbares, zumindest teilweise formangepasstes Einsatzteil ausgeformt ist.

Um die Schnittstelle in unbenutztem Zustand gegen äußere Einflüsse (wie z.B. Schwall- oder Spritzwasser und Fremdkörper) zu schützen, sieht eine weitere bevorzugte Ausgestaltung der Erfindung eine Verschlussklappe vor, die die Schnittstelle bei Nichtgebrauch verschließt. Die Verschlussklappe kann bevorzugt federbeaufschlagt sein, so dass sie bei Entnahme des Funktionselements selbsttätig in eine Verschlussposition verschwenkt. In hierzu bevorzugter Weiterbildung der Erfindung kann die Verschlussklappe in Doppelfunktion bei Nutzung der Schnittstelle, wenn sich also das Funktionselement in der Konsole in Betriebsposition befindet, das Funktionselement in der Betriebsposition verriegeln.

In diesem Zusammenhang sieht eine nutzerfreundliche Ausgestaltung der Erfindung vor, dass die Verschlussklappe aus der Verriegelungsposition durch Einführen einer kartenförmigen Entriegelungshilfe durch einen in der Stirnseite der Schnittstelle ausgebildeten Führungsschlitz entriegelbar ist. Das kartenförmige Entriegelungselement kann bevorzugt Scheckkartengröße haben, so dass übliche Scheck- oder Ausweiskarten, die der Fahrzeugnutzer mit sich führt, als Entriegelungshilfe dienen können. Dadurch ist mit sehr einfachen Mitteln, aufwandsarm und bauraumsparend eine Entriegelung der Schnittstellenverbindung ermöglicht.

Um die Handhabung bei Entnahme des Funktionselements - z.B. um dieses gegen ein anderes Funktionselement auszutauschen - weiter zu vereinfachen, sieht eine weitere bevorzugte Ausgestaltung der Erfindung vor, dass mindestens ein Federelement vorgesehen ist, das eine Federkraft auf das Funktionselement ausübt, die die Entnahme des Funktionselements bei Lösung der Verbindung zwischen den Schnittstellen bzw. bei gelöster Verbindung der Schnittstellen unterstützt.

Eine den verfügbaren Bauraum besonders gut nutzende Ausgestaltung der Erfindung sieht vor, dass in der Konsole zwei Vertiefungen ausgebildet sind, zwischen denen sich ein Trennsteg befindet und wobei die Schnittstelle in dem Trennsteg angeordnet ist. Die Anordnung der Schnittstelle in dem Trennsteg hat zudem den Vorteil, dass das Funktionselement bei entsprechender symmetrischer Ausgestaltung in zwei, um 180 Grad versetzten Positionen eingesetzt und in die Betriebsposition gebracht werden kann. Damit können Vorschriften mit einfachen Mitteln erfüllt werden, wonach bestimmte Geräte, wie beispielsweise Mobiltelefone, während der Fahrt nur für den Beifahrer, nicht aber für den Fahrer einsehbar sein dürfen.

Ausführungsbeispiele der Erfindung werden nachfolgend anhand einer Zeichnung weiter erläutert. Es zeigen:
- Figur 1: eine erste Ausgestaltung einer Konsole als Teil einer erfindungsgemäßen Konsolenanordnung,
- Figur 2: eine Variante zur Ausgestaltung nach Figur 1,
- Figur 3: eine Konsolenanordnung mit einer Konsole gemäß Figur 1,
- Figur 4: eine Konsolenanordnung mit einer Konsole gemäß Figur 2,
- Figur 5: einen Längsschnitt entlang der Linie V-V durch die Konsolenanordnung nach Figur 3 und
- Figur 6: eine Detaildarstellung des Bereichs A aus Figur 5.

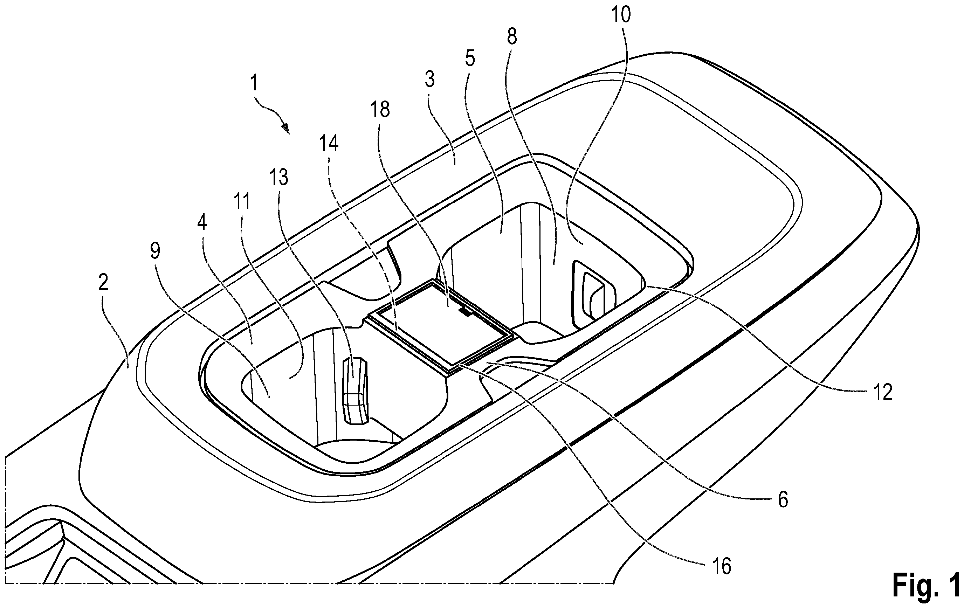

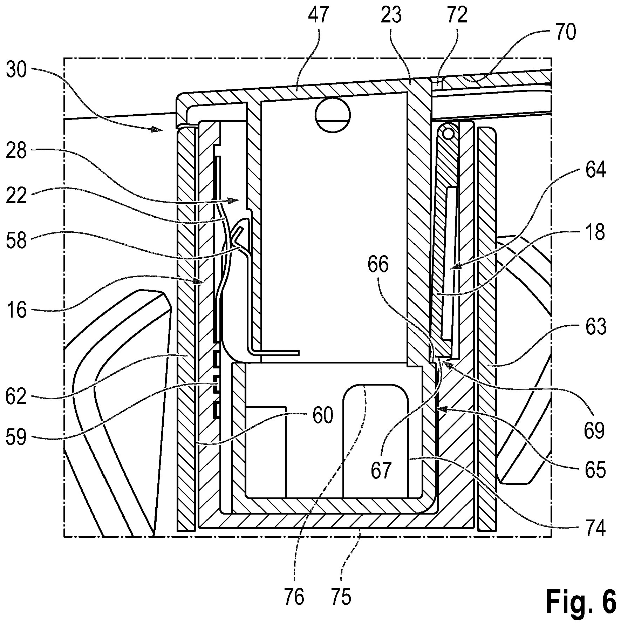

Figur 1 zeigt eine Konsole 1, die Teil einer Konsolenanordnung für ein Fahrzeug ist. Die Konsole 1 ist als Mittelkonsole ausgestaltet, die sich zwischen den Frontsitzen eines Fahrzeugs befindet. Die Konsole weist ein äußeres Gehäuse 2 mit einem umlaufenden Gehäuserand 3 auf. In die Konsole ist ein Einsatz 4 eingesetzt, der als sog. Cup-Holder 5 ausgestaltet ist und zwei aneinandergrenzende, durch einen Quersteg 6 getrennte Aufnahmen beispielsweise für Getränkebehälter ("Cups") in Form von Vertiefungen 8, 9 mit jeweiliger Innenkontur 10, 11 aufweist. Der Cup-Holder 5 weist einen brillenförmigen Randbereich 12 auf, der die Vertiefungen 8, 9 umgibt. In die Vertiefungen ragen an sich bekannte federnde Haltenasen 13. Es sind auch Ausgestaltungen denkbar, bei denen der Randbereich 12 nur Teile der Vertiefungen umgibt. In dem Quersteg 6 ist (wie im Zusammenhang mit Figur 6 näher erläutert) eine Aufnahme 14 für eine multifunktional mit Funktionselementen bestückbare elektromechanische Schnittstelle 16 - auch als Multi-Hub bezeichnet - vorgesehen.

In Figur 1 befindet sich die Schnittstelle nicht in Gebrauch. In diesem Nichtgebrauchszustand ist sie nicht mit einer korrespondierenden komplementären Schnittstelle eines Funktionselements verbunden und zum Schutz gegen das Eindringen von Flüssigkeit oder anderen externen Verschmutzungen von außen von einer Verschlussklappe 18 bedeckt bzw. verschlossen.

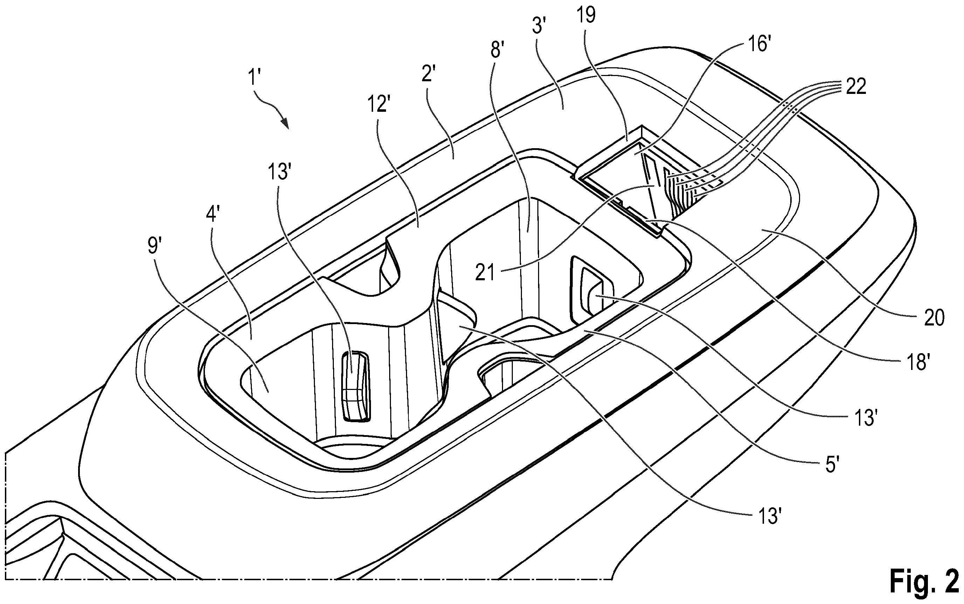

Figur 2 zeigt eine Modifikation der Konsole 1 gemäß Figur 1, wobei zur Figur 1 gleiche oder funktionsgleiche Elemente mit denselben, durch ein Apostroph ergänzten Bezugszeichen versehen sind. Zwischen den Vertiefungen 8', 9' befindet sich im Unterschied zu der Ausgestaltung nach Figur 1 kein Trennsteg. Die Schnittstelle 16' ist in einer passenden Aufnahme 19 im Endbereich 20 der Konsole 1' in deren Gehäuserand 3' angeordnet. In Figur 2 ist dabei nur zu Darstellungszwecken die Verschlussklappe 18' entgegen der Kraft einer nicht dargestellten Feder in eine geöffnete Position verschwenkt. Dies erlaubt einen Blick in die Schnittstelle 16, an deren einer Wand 21 federnde elektrische Kontakte 22 angedeutet sind.

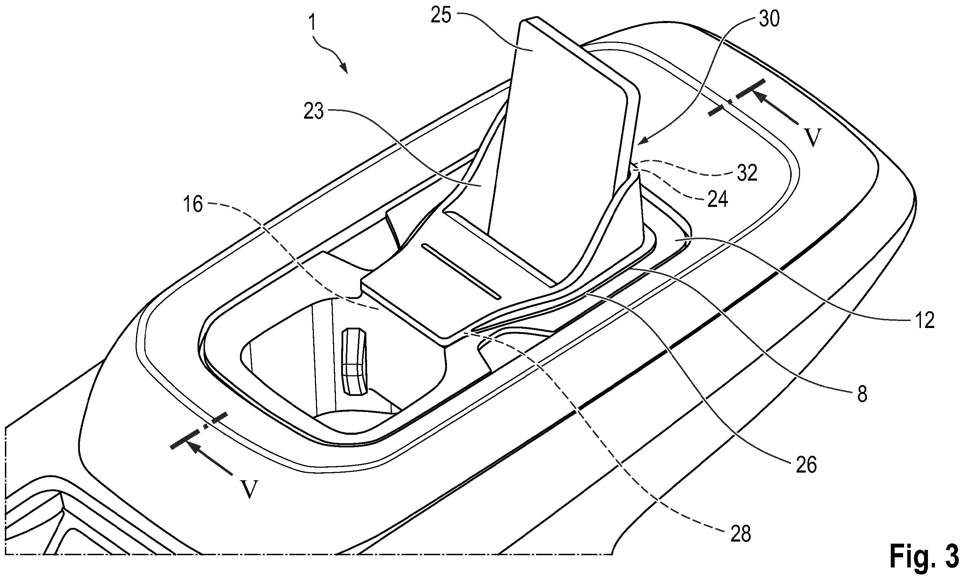

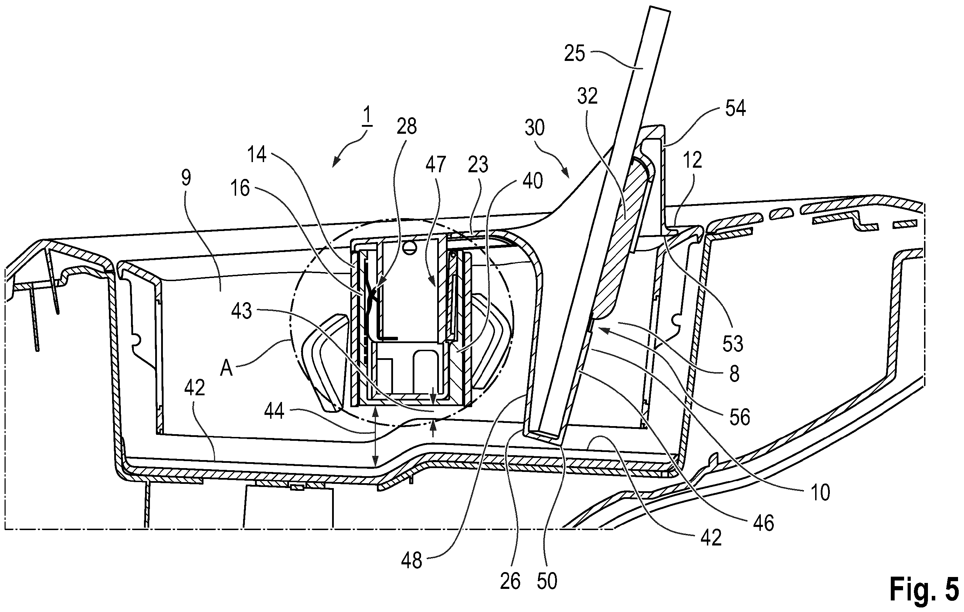

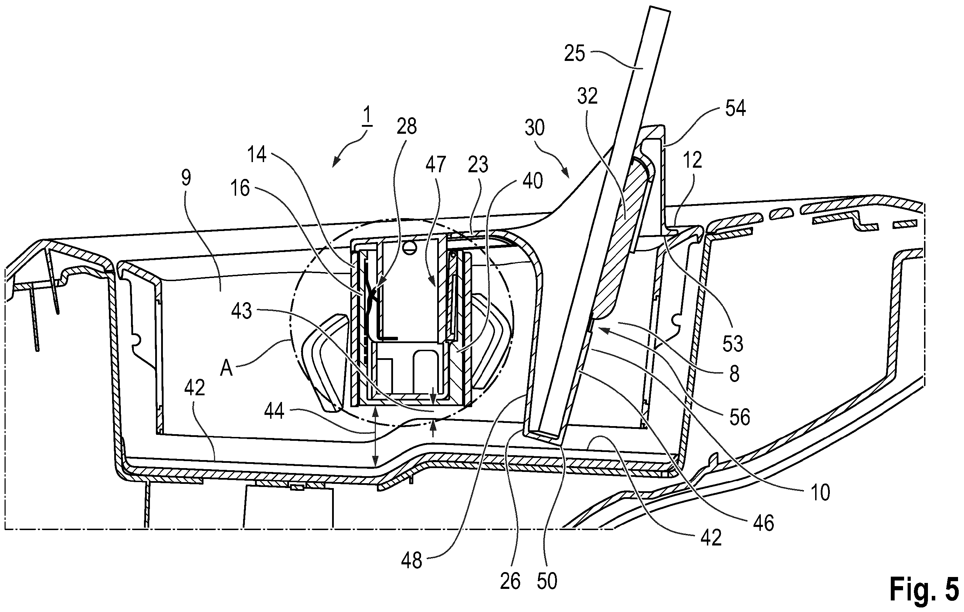

Figur 3 zeigt die Konsole 1 gemäß Figur 1, wobei in die Vertiefung 8 ein Funktionselement 23 in Form eines Halters mit integrierter Ladeeinrichtung 24 für ein Mobiltelefon 25 (beispielsweise ein sogenannter Qi-Charger) eingesetzt ist. Der in die Vertiefung 8 eintauchende (in Figur 5 deutlicher sichtbare) Fußbereich 26 des Funktionselements 23 stützt sich am Randbereich 12 und vor allem im Bodenbereich der Vertiefung 8 (Figur 5) ab. Mit der Schnittstelle 16 ist beim Einsetzen des Funktionselements 23 eine korrespondierende, komplementäre Schnittstelle 28 in Wirkverbindung gelangt. Dies bedeutet, dass die Schnittstelle 16 und die komplementäre Schnittstelle 28 eine elektrische Kontaktierung ausbilden und zugleich durch den Einsteckvorgang eine lösbare mechanische Verbindung gebildet haben. Diese mechanische Verbindung ist in bevorzugter Ausgestaltung die einzige Verbindung, die ein (vertikales) Herausnehmen oder Herausspringen des Funktionselements bei entsprechend wirkenden Vertikalkräften verhindert (wie nachfolgend noch beschrieben) oder zumindest aber erschwert.

In der in Figur 3 gezeigten Situation befindet sich das Funktionselement also in elektrischer und mechanischer Verbindung mit der Konsole bzw. in Kontakt mit den darin ausgebildeten, in Figur 3 nicht sichtbaren elektrischen Kontaktpartnern (federnden Kontakten) in Betriebsposition 30. In dieser Betriebsposition sorgt das Funktionselement 23 für eine Verbindung des Mobiltelefons 25 sowohl hinsichtlich auszutauschender Daten als auch besonders bevorzugt hinsichtlich der elektrischen Aufladung des Mobiltelefons 25 bzw. dessen Energiespeichers. Besonders bevorzugt erfolgt das Laden des Mobiltelefons 25 durch eine an sich bekannte und daher hier nicht näher beschriebene (bevorzugt kabellose induktive) Ladeeinrichtung 32, die an geeigneter Position in das Funktionselement 23 integriert ist (siehe Figur 5).

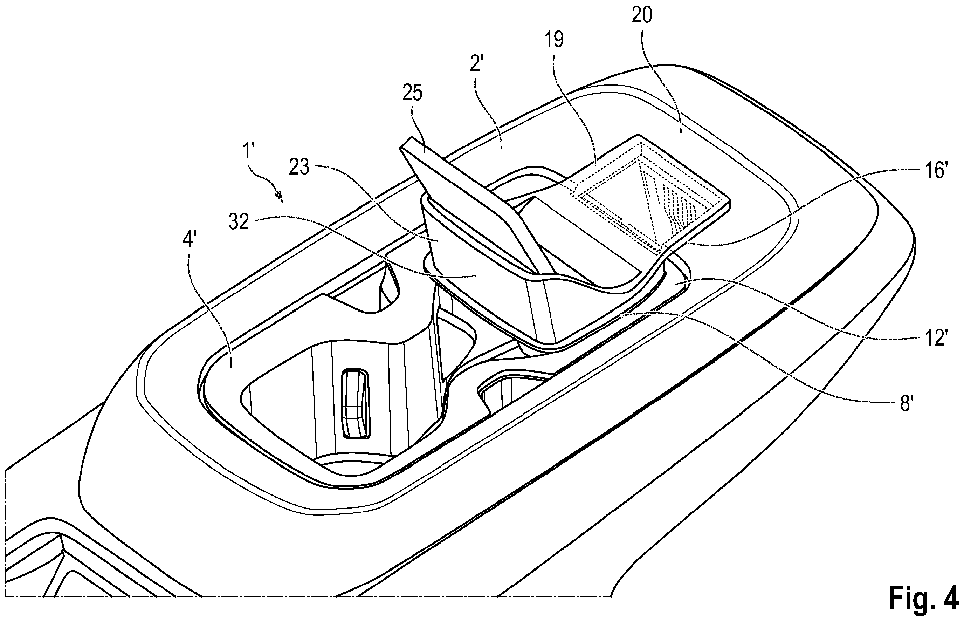

Figur 4 zeigt die Anordnung des Funktionselements 23 mit aufgenommenem Mobiltelefon 25 in einer gemäß Figur 2 gestalteten Konsole 1'. In diesem Fall kooperiert das Funktionselement 23 wie zuvor beschrieben mit der Schnittstelle 16', die gleichermaßen wie die zuvor erläuterte Schnittstelle 16 ausgestaltet, jedoch um 180 Grad gedreht und im Endbereich 20 der Konsole 1' angeordnet ist. Dadurch ist in vorteilhafter Weise das Display des Mobiltelefons 25 ebenfalls um 180 Grad gewendet, so dass beispielsweise verkehrsrechtlichen Vorschriften Rechnung getragen werden kann, wonach das Display des Mobiltelefons für den Fahrer (während der Fahrt) nicht einsehbar sein darf, während für den Beifahrer das Display erkennbar bleiben kann.

Figur 5 zeigt einen Längsschnitt entlang der Linie V-V in Figur 3. Die Schnittstelle 16 bzw. die Verbindung zwischen der Schnittstelle 16 und der korrespondierenden Schnittstelle 28 ist vorteilhafterweise in einer abgeschlossenen Multi-Hub-Aufnahme 40 angeordnet. Die Multi-Hub-Aufnahme 40 ist von dem Boden 42 der Vertiefung 8 in vertikalem Abstand 43 bzw. vom Boden 42 im Bereich der Vertiefung 9 in vertikalem Abstand 44 beabstandet. Damit ist vorteilhafterweise vermieden, dass unbeabsichtigt in die Vertiefungen 8, 9 gelangende, sich auf dem Boden 42 sammelnde Medien, insbesondere Flüssigkeiten, die Schnittstellen bzw. die elektrischen Kontakte beeinflussen oder schädigen.

Das Funktionselement 23 ist einstückig ausgebildet und umfasst ein Halte- oder Tragteil 46 für das Mobiltelefon 25, das sich in der Vertiefung 8 erstreckt, und ein elektrisches und mechanisches Verbindungsteil 47, das die korrespondierende Schnittstelle 28 enthält. Bevorzugt können die Teile 46, 47 einstückig im Spritzgussverfahren hergestellt sein. Das Halteteil 46 enthält die induktive Ladeeinrichtung 32. Die Kontur des Halteteils 46 ist im Mantelbereich 48 zumindest teilweise an die Innenkontur 10 der Vertiefung 8 angepasst und umfasst den Fußbereich 26, mit dem sich das Funktionselement 23 an einem Abstützpunkt 50 im Wesentlichen in vertikaler Richtung auf dem Boden 42 der Vertiefung 8 abstützt.

Bevorzugt ist ein zweiter Abstützpunkt 53 durch einen Fortsatz 54 des Halteteils 46 gebildet, mit dem es sich auf dem Randbereich 12 abstützt. Zusätzlich oder alternativ kann das Halteteil 46 in lateraler Richtung - also in Einbaulage quer zur Fahrzeuglängsrichtung - so ausgestaltet sein, dass es in konturangepasstem Körperkontakt mit der Innenkontur 10 bzw. deren Innenwandung 56 der Vertiefung 8 gelangt. Hierdurch ergibt sich eine zusätzliche Stabilisierung des Funktionselements 23 in der Betriebsposition 30.

Zur noch deutlicheren Erläuterung der Wirkungsweise der Schnittstellen und der Verschlussklappe zeigt Figur 6 den Ausschnitt A aus Figur 5 in vergrößerter Darstellung. In die Aufnahme 14, die von Wänden, von denen in Figur 6 nur die gegenüberliegenden Wände 62, 63 erkennbar sind, und dem Trennsteg 6 (Figur 1) begrenzt ist, ist die Schnittstelle 16 (Multi-Hub) eingesetzt. In Figur 6 sind die schon im Zusammenhang mit Figur 2 erwähnten federnden Kontakte 22 genauer erkennbar. Die komplementäre Schnittstelle 28 ist mit Kontakten 58 ausgestattet, die in der Betriebsposition 30 in Anlage und damit in elektrischen Kontakt mit den zugeordneten Kontakten 22 gelangen. Die Kontakte 22 sind über eine nicht näher dargestellte elektrische Verbindung 59 mit dem Bordnetz des Fahrzeugs verbunden.

In der dargestellten Betriebsposition 30 ist die korrespondierende komplementäre Schnittstelle 28 wie beschrieben in die Schnittstelle 16 eingeführt, und das Verbindungsteil 47 hat die Verschlussklappe 18 aus der in Figur 1 dargestellten verschlossenen Position entgegen der Kraft einer nicht gezeigten Feder um eine obere, senkrecht zur Zeichenebene orientierte Schwenkachse in eine geöffnete Position 64 ausgelenkt. In dieser Position liegt die Verschlussklappe 18 federbeaufschlagt am Verbindungsteil 47 an. Im unteren Abschnitt 65 des Verbindungsteils 47 ist ein Absatz 66 vorgesehen, der im Zusammenwirken mit einer Kante 67 des freien Endes der Verschlussklappe 18 eine Verriegelung 69 bildet. Um diese Verriegelung zu lösen, ist in der dem Fahrzeuginnenraum zugewandten Oberseite 70 des Verbindungsteils 47 ein Schlitz 72 vorgesehen, durch den eine übliche Scheckkarte einführbar ist, die mit ihrer führenden Kante die Verschlussklappe 18 entgegen dem Uhrzeigersinn um die Schwenkachse so weit auslenkt, dass die Kante 67 hinter den Absatz 66 und damit aus dem vertikalen Bewegungspfad des Abschnitts 65 bei Entnahme des Funktionselements 23 zurücktaucht. Dadurch ist das Funktionselement 23 durch vertikales Ziehen leicht aus der Betriebsposition 30 entnehmbar.

Die Entnahmebewegung kann durch Federelemente, wie z.B. im Wesentlichen senkrecht wirkende Schraubenfedern, unterstützt werden. Eine nicht näher dargestellte Schraubenfeder könnte sich z.B. in einer in Figur 6 nur angedeuteten, nach unten offenen Tasche 74 befinden und sich so mit ihrem einen Ende am Boden 75 des Aufnahmeraums und mit ihrem anderen Ende im oberen Bereich 76 der Tasche 74 abstützen. In Betriebsposition des Funktionselements 23 ist die Schraubenfeder in einem zusammengedrückten, also vorgespannten Zustand. Nach Entnahme des Funktionselements 23 kann bei Bedarf ein mit entsprechender komplementärer Schnittstelle 28 ausgestaltetes anderes Funktionselement wie beschrieben eingesetzt und verriegelt werden.

### Bezugszeichenliste

- 1, 1': Konsole
- 2, 2': äußeres Gehäuse der Konsole
- 3, 3`: Gehäuserand
- 4, 4`: Einsatz
- 5, 5`: Cup-Holder
- 6: Quersteg
- 8, 8`: Vertiefung
- 9, 9': Vertiefung
- 10, 11: Innenkontur
- 12: Randbereich des Cup-Holders
- 13, 13`: Haltenasen
- 14: Aufnahme
- 16, 16': Schnittstelle (Multi-Hub)
- 18, 18': Verschlussklappe
- 19: Aufnahme
- 20: Endbereich
- 21: Wand
- 22: Kontakte
- 23: Funktionselement
- 24: Ladeeinrichtung
- 25: Mobiltelefon
- 26: Fußbereich
- 28: komplementäre Schnittstelle
- 30: Betriebsposition
- 32: Ladeeinrichtung
- 40: Multi-Hub-Aufnahme
- 42: Boden
- 43, 44: Vertikale Abstände
- 46: Tragteil
- 47: elektrisches und mechanisches Verbindungsteil
- 48: Mantelbereich
- 50: Abstützpunkt
- 53: Abstützpunkt
- 54: Fortsatz
- 56: Innenwandung
- 58: Kontakte
- 59: elektrische Verbindung
- 60: Aufnahmeraum
- 62, 63: gegenüberliegende Wände
- 64: geöffnete Position
- 65: unterer Abschnitt des Verbindungsteils
- 66: Absatz
- 67: Kante
- 69: Verriegelung
- 70: Oberseite
- 72: Schlitz
- 74: Tasche
- 75: Boden des Aufnahmeraums
- 76: oberer Bereich

- A: Ausschnitt

## Patentansprüche

1. Konsolenanordnung für ein Fahrzeug
- mit einer Konsole (1) mit mindestens einer Vertiefung (8, 9) zur Aufnahme mindestens eines Gegenstands,
- mit einem Randbereich (12), der zumindest einen Teilumfang der Vertiefung (8, 9) umgibt,
- mit einer Schnittstelle (16), die eine elektrische Kontaktierung und zugleich eine lösbare mechanische Verbindung mit einer korrespondierenden komplementären Schnittstelle (28) eines Funktionselements (23) ausbildet, wenn sich das Funktionselement (23) in der Konsole (1) in Betriebsposition (30) befindet,
- wobei das Funktionselement (23) mindestens eine Abstützung (50, 53) aufweist, mit der es sich an der Konsole (1) abstützt, und
- wobei das Funktionselement (23) so ausgestaltet ist, dass seine mechanische Verbindung mit der Konsole (1) ausschließlich über die Schnittstelle (16) bewirkt ist und dass das Funktionselement (23) in seiner Betriebsposition (30) ansonsten mit der Konsole (1) mechanisch unverbunden bleibt.

2. Konsolenanordnung nach Anspruch 1, wobei
- das Funktionselement (23) eine kabellose Ladeeinrichtung (32) für ein elektrisches Gerät aufweist.

3. Konsolenanordnung nach wenigstens einem der vorhergehenden Ansprüche, wobei
- die Schnittstelle (16) eine multifunktional mit verschiedenen Funktionselementen (23) bestückbare Schnittstelle ist.

4. Konsolenanordnung nach wenigstens einem der vorhergehenden Ansprüche, wobei
- sich die Abstützung (50, 53) in Betriebsposition (30) des Funktionselements (23) auf dem Boden (42) der Vertiefung (8, 9) abstützt.

5. Konsolenanordnung nach wenigstens einem der vorhergehenden Ansprüche, wobei
- die Vertiefung (8, 9) einen Cup-Holder (5) ausbildet und
- die elektrische Kontaktierung zwischen der Schnittstelle (16) und der komplementären Schnittstelle (28) in Betriebsposition (30) des Funktionselements (23) in vertikalem Abstand (44) vom Boden (42) der Vertiefung (8, 9) erfolgt.

6. Konsolenanordnung nach wenigstens einem der vorhergehenden Ansprüche, wobei
- die Abstützung (50, 53) als ein in die Vertiefung (8, 9) einführbares, zumindest teilweise formangepasstes Einsatzteil ausgeformt ist.

7. Konsolenanordnung nach wenigstens einem der vorhergehenden Ansprüche,
- mit einer Verschlussklappe (18), die die Schnittstelle (16) bei Nichtgebrauch verschließt und die die lösbare mechanische Verbindung der Schnittstelle (16) mit der komplementären Schnittstelle (28) in der Betriebsposition (30) verriegelt.

8. Konsolenanordnung nach Anspruch 7, wobei
- die Verschlussklappe (18) aus ihrer Verriegelungsposition (69) durch Einführen eines kartenförmigen Entriegelungselements durch einen in der Stirnseite der Schnittstelle (16) ausgebildeten Führungsschlitz (72) entriegelbar ist.

9. Konsolenanordnung nach wenigstens einem der vorhergehenden Ansprüche, wobei
- mindestens ein Federelement vorgesehen ist, das eine Federkraft auf das Funktionselement (23) ausübt, die die Entnahme des Funktionselements (23) bei Lösung der Verbindung zwischen den Schnittstellen (16, 28) bzw. bei gelöster Verbindung der Schnittstellen (16, 28) unterstützt.

10. Konsolenanordnung nach wenigstens einem der vorhergehenden Ansprüche, wobei
- in der Konsole (1) zwei Vertiefungen (8, 9) ausgebildet sind, zwischen denen sich ein Trennsteg (6) befindet und
- wobei die Schnittstelle (16) in dem Trennsteg (6) angeordnet ist.
